# FASCICULE DE BREVET EUROPEEN

(11) **EP 3 554 921 B1**
(45) Date de publication et mention de la délivrance du brevet: **30.12.2020**
(21) Numéro de dépôt: 17804631.4
(22) Date de dépôt: 14.11.2017
(51) Int. Cl.: B62D 1/183

(54) **COLONNE DE DIRECTION RÉTRACTABLE MANUELLEMENT, POUR UN VÉHICULE**
MANUELL EINFAHRBARE LENKSÄULE FÜR EIN FAHRZEUG
MANUALLY RETRACTABLE STEERING COLUMN FOR A VEHICLE

(30) Priorité: 14.12.2016 FR 1662395
(43) Date de publication de la demande: 23.10.2019
(73) Titulaire: PSA Automobiles SA, 78300 Poissy (FR)
(72) Inventeur: CAVAREC, Alan, 78350 Les Loges en Josas (FR); RONDEL, Jeremie, 78210 Saint Cyr l'Ecole (FR)
(86) Numéro de dépôt international: PCT/FR2017/053104
(87) Numéro de publication internationale: WO 2018/109296

(56) Documents cités:
- EP-A2- 1 083 108
- EP-A2- 1 932 744
- JP-A- 2005 225 298

## Description

L'invention concerne les colonnes de direction à réglage manuel qui équipent certains véhicules, éventuellement de type automobile.

Comme divulgué dans le document JP2005225298A, certains véhicules, généralement de type automobile, comprennent une colonne de direction comportant une partie arrière, une partie intermédiaire et une partie avant. La partie avant est solidarisée fixement au véhicule. La partie intermédiaire est translatable par rapport à la partie avant sur une distance maximale prédéfinie en cas de fort appui sur le volant consécutif à un choc du véhicule par l'avant. Cette distance maximale, qui permet un enfoncement du volant vers l'avant en cas de choc, est fréquemment de l'ordre de 100 mm. La partie arrière est montée en translation et en rotation sur la partie intermédiaire, et le volant est solidarisé à son extrémité arrière qui est située du côté du conducteur.

Ce montage en translation et en rotation de la partie arrière sur la partie intermédiaire est destiné à permettre à un usager du véhicule, généralement son conducteur, de régler manuellement la position longitudinale et la hauteur du volant, après avoir déverrouillée la partie arrière par actionnement d'un levier latéral.

Cette translation est généralement permise par deux premières ouvertures oblongues définies sur deux côtés opposés de la partie arrière et dans lesquelles sont montés en translation deux plots. Elle permet généralement un déplacement longitudinal du volant sur une distance de l'ordre de 50 mm.

Par ailleurs, cette rotation est généralement permise par deux secondes ouvertures oblongues définies sur deux côtés opposés de la partie intermédiaire et dans lesquelles sont montés en translation les deux plots précités. Elle permet généralement un déplacement vertical du volant sur une hauteur de l'ordre de 40 mm.

Un inconvénient de ce type de colonne de direction à réglage manuel réside dans le fait qu'il ne permet pas de la rétracter partiellement vers l'avant du véhicule pour décaler le volant vers l'avant et ainsi augmenter l'espace libre entre le siège conducteur et le volant. Une telle augmentation faciliterait l'entrée du conducteur dans le véhicule ou la sortie du conducteur hors du véhicule ou améliorerait le confort du conducteur assis avant une phase de roulage ou pendant une phase de conduite automatisée (ou autonome).

Aujourd'hui, seules les colonnes de direction à réglage électrique sont pourvues de moyens de rétractation électriques. Mais ces derniers s'avèrent très onéreux, lourds, encombrants, et très difficilement compatibles avec les architectures des colonnes de direction à réglage manuel.

L'invention a donc notamment pour but d'améliorer la situation.

Elle propose notamment à cet effet une colonne de direction, destinée à équiper un véhicule, et comprenant une partie arrière à laquelle est solidarisé un volant et couplée à une partie intermédiaire translatable sur une distance maximale prédéfinie par rapport à une partie avant, destinée à être solidarisée fixement au véhicule, en cas de fort appui sur le volant.

Cette colonne de direction se caractérise par le fait qu'elle comprend également des moyens de rétractation comportant :
- au moins une crémaillère solidarisée fixement à l'une des parties intermédiaire et avant,
- au moins une roue dentée montée à rotation par rapport à l'autre des parties intermédiaire et avant, et engrenant cette crémaillère, et
- des moyens d'entraînement propres, en cas d'entraînement en rotation sur un secteur angulaire par une main d'un usager du véhicule, à entraîner en rotation sur ce secteur angulaire cette/chaque roue dentée afin de translater cette/chaque crémaillère, et donc la partie intermédiaire, par rapport à la partie avant sur une distance qui est fonction de ce secteur angulaire et inférieure ou égale à la distance maximale prédéfinie.

On peut ainsi rétracter manuellement vers l'avant du véhicule une partie de la colonne de direction pour décaler le volant vers l'avant sans que cela n'induise des augmentations notables de l'encombrement et du poids et sans que cela ne nécessite de modification de l'architecture de la colonne de direction (à réglage manuel).

La colonne de direction selon l'invention peut comporter d'autres caractéristiques qui peuvent être prises séparément ou en combinaison, et notamment :
- dans un premier mode de réalisation les moyens d'entraînement peuvent comprendre une mollette solidarisée fixement à une unique roue dentée et propre, en cas d'entraînement en rotation par la main de l'usager, à entraîner en rotation cette roue dentée ;
- dans un second mode de réalisation elle peut comprendre des première et seconde crémaillères solidarisées fixement à deux côtés opposés de l'une des parties intermédiaire et avant, des première et seconde roues dentées montées à rotation par rapport à deux côtés opposés de l'autre des parties intermédiaire et avant et engrenant respectivement les première et seconde crémaillères. Dans ce cas, les moyens d'entraînement comprennent un axe monté à rotation par rapport aux deux côtés opposés de l'autre des parties intermédiaire et avant et auquel sont solidarisées fixement les première et seconde roues dentées ;
   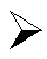 les moyens d'entraînement peuvent comprendre un levier solidarisé fixement à l'axe de rotation et propre, en cas d'entraînement en rotation par la main de l'usager, à entraîner en rotation cet axe de rotation et donc les roues dentées ;
   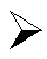 en variante, les moyens d'entraînement peuvent comprendre une mollette
   solidarisée fixement à l'axe de rotation et propre, en cas d'entraînement en rotation par la main de l'usager, à entraîner en rotation cet axe de rotation et donc les roues dentées ;
- chaque crémaillère peut être solidarisée fixement à sa partie intermédiaire et chaque roue dentée peut être montée à rotation par rapport à sa partie avant ;
- sa partie arrière peut être montée en translation et en rotation sur sa partie intermédiaire.

L'invention propose également un véhicule, éventuellement de type automobile, et comprenant une colonne de direction du type de celle présentée ci-avant.

D'autres caractéristiques et avantages de l'invention apparaîtront à l'examen de la description détaillée ci-après, et des dessins annexés, sur lesquels :
- la figure 1 illustre schématiquement, dans une vue en perspective, une partie d'un exemple de réalisation d'une colonne de direction selon l'invention, et
- la figure 2 illustre schématiquement, dans une autre vue en perspective, la colonne de direction de la figure 1.

L'invention a notamment pour but de proposer une colonne de direction CD à réglage manuel, rétractable et destinée à équiper un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comprenant une colonne de direction, et éventuellement à conduite au moins partiellement automatisée ou autonome.

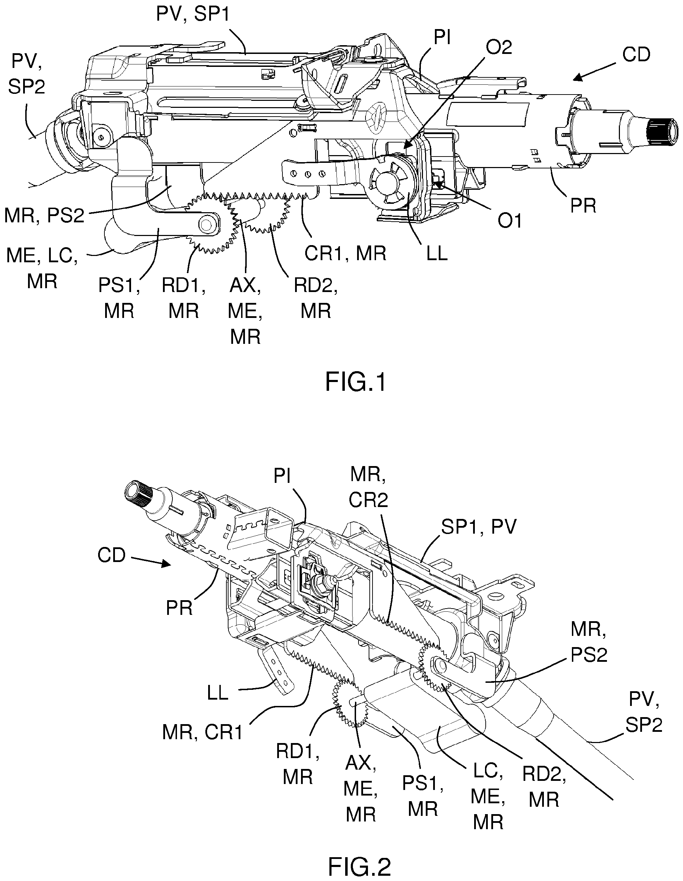

On a schématiquement représenté sur les figures 1 et 2 un exemple de réalisation d'une partie d'une colonne de direction CD selon l'invention, avant installation dans un véhicule.

Comme illustré une colonne de direction CD, selon l'invention, comprend une partie arrière PR, une partie intermédiaire PI, une partie avant PV, et des moyens de rétractation MR.

La partie avant PV est destinée à être solidarisée fixement au véhicule. Elle comprend une première sous-partie SP1 et une seconde sous-partie SP2 destinée à transmettre aux roues directionnelles les rotations du volant (non représenté), par exemple via un mécanisme de direction assistée.

La partie intermédiaire PI est translatable par rapport à la partie avant PV, et plus précisément par rapport à sa première sous-partie SP1 qui est fixe. Cette translation peut se faire sur une distance maximale dₘₐₓ prédéfinie en cas de fort appui sur le volant consécutif à un choc du véhicule par l'avant. Par exemple, cette distance maximale est égale à environ 100 mm.

La partie arrière PR est couplée à la partie intermédiaire PI, et comprend une extrémité arrière située du côté du conducteur du véhicule et à laquelle est solidarisé le volant. Ce couplage est agencé de manière à permettre une translation et une rotation de la partie arrière PR par rapport à la partie intermédiaire pour régler manuellement la position longitudinale et la hauteur du volant dans l'habitacle du véhicule, après déverrouillage de la partie arrière PR par actionnement d'un levier latéral LL.

Par exemple, le réglage manuel de la translation se fait grâce à deux premières ouvertures oblongues O1 qui sont définies suivant une direction sensiblement longitudinale sur deux parois de la partie arrière PR installées sur deux côtés opposés et dans lesquelles sont montés en translation deux plots. Cette translation peut, par exemple, permettre un déplacement longitudinal du volant sur une distance d'environ 50 mm ([- 25 mm, + 25 mm]). La direction longitudinale est ici celle du véhicule, c'est-à-dire celle qui est parallèle aux portières latérales.

Egalement par exemple, le réglage manuel de la rotation se fait grâce à deux secondes ouvertures oblongues O2 qui sont définies suivant une direction sensiblement perpendiculaire aux premières ouvertures oblongues O1 sur deux parois de la partie intermédiaire PI installées sur deux côtés opposés et dans lesquelles sont montés en translation les deux plots précités. Cette rotation peut, par exemple, permettre un déplacement vertical du volant sur une hauteur d'environ 40 mm ([- 20 mm, + 20 mm]). La direction verticale est ici celle du véhicule, c'est-à-dire celle qui est perpendiculaire aux directions longitudinale et transversale du véhicule.

Les moyens de rétractation MR comprennent au moins une crémaillère CRj, au moins une roue dentée RDj, et des moyens d'entraînement ME.

La/chaque crémaillère CRj est solidarisée fixement à l'une des parties intermédiaire PI et avant PV. Comme illustré non limitativement sur les figures 1 et 2, la/chaque crémaillère CRj peut être constituée par une série de dents définies sur un bord périphérique d'une paroi de l'une des parties intermédiaire PI et avant PV, qui est éventuellement rapportée.

La/chaque roue dentée RDj est montée à rotation par rapport à l'autre des parties intermédiaire PI et avant PV et engrène une crémaillère CRj correspondante.

Par conséquent, si la/chaque crémaillère CRj est solidarisée fixement à la partie intermédiaire PI, alors la/chaque roue dentée RDj est montée à rotation par rapport à la partie avant PV. Inversement, si la/chaque crémaillère CRj est solidarisée fixement à la partie avant PV, alors la/chaque roue dentée RDj est montée à rotation par rapport à la partie intermédiaire PI. On considère dans ce qui suit, comme illustré non limitativement sur les figures 1 et 2, que la/chaque crémaillère CRj est solidarisée fixement à la partie intermédiaire PI, et que la/chaque roue dentée RDj est montée à rotation par rapport à la partie avant PV.

On notera que dans l'exemple illustré non limitativement sur les figures 1 et 2, les moyens de rétractation MR comprennent des première CR1 (j = 1) et seconde CR2 (j = 2) crémaillères et des première RD1 (j = 1) et seconde RD2 (j = 2) roues dentées. Les première CR1 et seconde CR2 crémaillères sont, ici, solidarisées fixement à deux parois (éventuellement rapportées) de la partie intermédiaire PI situés sur deux côtés opposés de cette dernière (PI). Les première RD1 et seconde RD2 roues dentées sont, ici, montées à rotation par rapport à deux côtés opposés de la partie avant PV et engrènent respectivement les première CR1 et seconde CR2 crémaillères. Dans ce cas, comme illustré, les moyens d'entraînement ME peuvent, par exemple, comprendre un axe AX monté à rotation par rapport aux deux côtés opposés de la partie avant PV et auquel sont solidarisées fixement les première RD1 et seconde RD2 roues dentées. Par exemple, et comme illustré non limitativement sur les figures 1 et 2, l'axe AX peut être monté à rotation sur deux pattes de support PS1 et PS2 qui sont, ici, solidarisées fixement à la partie avant PV sur ses deux côtés opposés et qui sont éventuellement rapportées.

Les moyens d'entraînement ME sont propres (ou agencés pour), en cas d'entraînement en rotation sur un secteur angulaire θ par une main d'un usager du véhicule (par exemple le conducteur), à entraîner en rotation sur ce secteur angulaire θ la/chaque roue dentée RDj. Cet entraînement en rotation est destiné à translater la/chaque crémaillère CRj, et donc la partie intermédiaire PI, par rapport à la partie avant PV sur une distance qui est fonction du secteur angulaire θ et inférieure ou égale à la distance maximale dₘₐₓ.

Grâce à ces moyens de rétractation MR totalement manuels, il est désormais possible de rétracter manuellement vers l'avant du véhicule une partie d'une colonne de direction à réglage manuel pour décaler le volant vers l'avant. De plus l'utilisation de roue(s) dentée(s) RDj et de crémaillère(s) CRj n'induit pas d'augmentation notable de l'encombrement ou d'augmentation notable du poids, et ne nécessite pas de modification de l'architecture de la colonne de direction à réglage manuel (en d'autres termes on peut adjoindre les moyens de rétractation MR à une colonne de direction à réglage manuel de l'art antérieur).

On notera que la valeur du secteur angulaire θ peut varier entre 0°, qui correspond à une première position de rétractation nulle, et une valeur θₘₐₓ qui dépend de la distance maximale (≤ dₘₐₓ) sur laquelle chaque crémaillère CRj peut se translater et donc qui correspond à une seconde position de rétractation maximale. Par conséquent, l'usager peut choisir en fonction de ses besoins du moment la valeur du secteur angulaire θ, et il est certain, lorsqu'il replace les moyens d'entraînement ME dans leur première position, que le volant sera de nouveau placé dans la même position que celle dans laquelle il était placé avant sa rétractation et qu'il utilise pour conduire le véhicule.

Les moyens d'entraînement ME peuvent être agencés de différentes façons.

Ainsi, lorsque les moyens de rétractation MR ne comprennent qu'une roue dentée RDj et qu'une crémaillère CRj, les moyens d'entraînement ME peuvent comprendre une mollette solidarisée fixement à cette roue dentée RDj et propre, en cas d'entraînement en rotation par la main de l'usager, à entraîner en rotation cette roue dentée RDj (ce qui provoque la translation de la crémaillère CRj et donc la rétractation du volant vers l'avant).

En variante, et comme illustré non limitativement sur les figures 1 et 2, lorsque les moyens de rétractation MR comprennent deux roues dentées RDj solidarisées fixement à un axe AX et deux crémaillères CRj, les moyens d'entraînement ME peuvent comprendre un levier LC solidarisé fixement à cet axe AX et propre, en cas d'entraînement en rotation par la main de l'usager, à entraîner en rotation cet axe AX et donc les roues dentées RDj (ce qui provoque la translation de la crémaillère CRj et donc la rétractation du volant vers l'avant). On notera qu'au lieu d'utiliser des moyens d'entraînement ME comprenant un levier LC, on peut utiliser des moyens d'entraînement ME comprenant une mollette solidarisée fixement à l'axe AX (par exemple au niveau de l'une de ses deux extrémités) et propre, en cas d'entraînement en rotation par la main de l'usager, à entraîner en rotation cet axe AX et donc les roues dentées RDj (ce qui provoque la translation des crémaillères CRj et donc la rétractation du volant vers l'avant).

L'invention offre plusieurs avantages, parmi lesquels :
- elle permet d'avoir des colonnes de direction à réglage manuel et rétractables manuellement beaucoup moins chères que les colonnes de direction électriques, et notablement moins encombrantes et moins lourdes que ces dernières,
- elle permet d'utiliser un support de colonne de direction commun aux colonnes de direction rétractables selon l'invention et aux colonnes de direction à réglage manuel et non rétractables,
- elle permet d'offrir au conducteur un espace plus important de nature à faciliter son entrée ou sa sortie et à améliorer son confort avant une phase de roulage ou pendant une phase de conduite automatisée (ou autonome).

## Revendications

1. Colonne de direction (CD) pour un véhicule, ladite colonne (CD) comprenant une partie arrière (PR) à laquelle est solidarisé un volant et couplée à une partie intermédiaire (PI) translatable sur une distance maximale prédéfinie par rapport à une partie avant (PV), destinée à être solidarisée fixement audit véhicule, en cas de fort appui sur ledit volant, **caractérisée en ce qu'**elle comprend en outre des moyens de rétractation (MR) comprenant i) au moins une crémaillère (CRj) solidarisée fixement à l'une desdites parties intermédiaire (PI) et avant (PV), ii) au moins une roue dentée (RDj) montée à rotation par rapport à l'autre desdites parties intermédiaire (PI) et avant (PV) et engrenant ladite crémaillère (CRj), et iii) des moyens d'entraînement (ME) propres, en cas d'entraînement en rotation sur un secteur angulaire par une main d'un usager dudit véhicule, à entraîner en rotation sur ce secteur angulaire ladite roue dentée (RDj) afin de translater ladite crémaillère (CRj), et donc ladite partie intermédiaire (PI), par rapport à ladite partie avant (PV) sur une distance fonction dudit secteur angulaire et inférieure ou égale à ladite distance maximale.

2. Colonne de direction selon la revendication 1, **caractérisée en ce qu'**elle comprend des première (CR1) et seconde (CR2) crémaillères solidarisées fixement à deux côtés opposés de l'une desdites parties intermédiaire (PI) et avant (PV), des première (RD1) et seconde (RD2) roues dentées montées à rotation par rapport à deux côtés opposés de l'autre desdites parties intermédiaire (PI) et avant (PV) et engrenant respectivement lesdites première (CR1) et seconde (CR2) crémaillères, et **en ce que** lesdits moyens d'entraînement (ME) comprennent un axe (AX) monté à rotation par rapport auxdits deux côtés opposés de l'autre desdites parties intermédiaire (PI) et avant (PV) et auquel sont solidarisées fixement lesdites première (RD1) et seconde (RD2) roues dentées.

3. Colonne de direction selon la revendication 2, **caractérisée en ce que** lesdits moyens d'entraînement (ME) comprennent un levier (LC) solidarisé fixement audit axe (AX) et propre, en cas d'entraînement en rotation par ladite main de l'usager, à entraîner en rotation ledit axe (AX) et donc lesdites roues dentées (RDj).

4. Colonne de direction selon la revendication 2, **caractérisée en ce que** lesdits moyens d'entraînement (ME) comprennent une mollette solidarisée fixement audit axe (AX) et propre, en cas d'entraînement en rotation par ladite main de l'usager, à entraîner en rotation ledit axe (AX) et donc lesdites roues dentées (RDj).

5. Colonne de direction selon la revendication 1, **caractérisée en ce que** lesdits moyens d'entraînement (ME) comprennent une mollette solidarisée fixement à ladite roue dentée (RDj) et propre, en cas d'entraînement en rotation par ladite main de l'usager, à entraîner en rotation ladite roue dentée (RDj).

6. Colonne de direction selon l'une des revendications 1 à 5, **caractérisée en ce que** chaque crémaillère (CRj) est solidarisée fixement à ladite partie intermédiaire (PI) et chaque roue dentée (RDj) est montée à rotation par rapport à ladite partie avant (PV).

7. Colonne de direction selon l'une des revendications 1 à 6, **caractérisée en ce que** ladite partie arrière (PR) est montée en translation et en rotation sur ladite partie intermédiaire (PI).

8. Véhicule, **caractérisé en ce qu'**il comprend une colonne de direction (CD) selon l'une des revendications précédentes.

9. Véhicule selon la revendication 8, **caractérisé en ce qu'**il est de type automobile.

## Patentansprüche

1. Lenksäule Richtung (CD) für ein Fahrzeug, das ist die e - Säule (CD) umfasst, um einen Teil hinteren (PR), an dem ein Lenkrad befestigt ist und mit einem Teil - Zwischenprodukt (PI) übersetzbar auf einem vorbestimmten maximalen Abstand gegen zu einem Abschnitt vor (PV), bestimmt zu werden , das fest an dem Fahrzeug befestigt, im Fall einer starken Unterstützung auf dem Rad, **dadurch gekennzeichnet**, e in diesen ' e Ile ferner aufweist d sind mittels Retraktion (MR), umfassend i) mindestens eine Zahnstange (CRj) fest mit dem befestigten einen der genannten s Teil s Intermediate (PI) und der vorderen (PV), ii) mindestens ein Rad gezahnt (Rdj drehbar relativ zu montierenden) 'eine n Addition der genannten Zwischenabschnitte (PI) und vor (PV) und mit der Zahnstange (kämmendem CRj) und iii) Antriebsmittel (ME) besitzen , im Falle einer Drehung auf einem Winkelsektor von einer Hand eines Benutzers des Fahrzeugs angetrieben wird, zum Antrieb des Zahnrades (RDj) in Rotation auf diesem Winkelsektor um zu übersetzen , die Zahnstange (CRj), und daher der Zwischenteil (PI) relativ zu dem vorderen Teil (PV) über eine Entfernung, die eine Funktion des Winkelsektors ist und kleiner oder gleich der maximalen Entfernung ist.

2. Lenksäule nach Anspruch 1, **dadurch gekennzeichnet** e, dass sie einem ersten (CR1) und zweite (CR2) fest angebracht Gestellen in zwei entgegengesetzten Seiten einen der genannten Zwischenabschnitte (PI) und die vordere (PV), der erster (RD1) und zweiten (RD2) Zahnrad für eine Drehung mit Bezug auf zwei gegenüberliegenden Seiten des montierten 'einen n Zusatz der genannten Zwischenabschnitte (PI) und vor (PV) ist und an den jeweilige ersten (CR1) und zweiten (CR2) Gestellen und daß die Antriebseinrichtung (ME) umfassen , der eine Achse (AX) drehbar in Bezug montiert genannten zwei gegenüberliegenden Seiten des anderen der genannten Zwischenabschnitte (PI) und der vorderen (PV) und dem s IS t integral ES fest die ersten (RD1) und zweiten (RD2) Zahnräder.

3. Lenksäule nach Anspruch 2, **dadurch gekennzeichnet** e in dass die Antriebsmittel (ME) umfasst einen Hebel (LC) fest an der Achse (AX) und angepasst is, im Falle der durch die Hand des in Drehantriebs Benutzer, Drehen der Achse (AX) und damit des sogenannten s-Rades s gezahntes s (Rdj).

4. Lenksäule nach Anspruch 2, **dadurch gekennzeichnet** e in dass die Antriebsmitteln (ME) ein Rad fest an der Achse befestigt (AX) und angepasst is, im Fall des durch die Hand des Benutzers in Drehantrieb, zu Drehen der Achse (AX) und damit der Zahnräder (RDj).

5. Lenksäule nach Anspruch 1, **dadurch gekennzeichnet** e in dass die Antriebsmitteln (ME) ein Rad befestigt ist fest mit dem adit e Zahnrad (Rdj) und sauber, im Fall des durch die Hand in dem Rotationsantrieb Benutzer, Drehen des hat die e Zahnrad (Rdj).

6. Lenksäule selo n einem der Ansprüche 1 bis 5, **dadurch gekennzeichnet** in, daß jedes Gestell (CRj) fest befestigt ist, ein dem Zwischenabschnitt (PI) und jedem Zahnrad (Rdj) ist drehbar in Bezug zu montierenden besagter vorderer Teil (PV) .

7. Lenksäule selo n einem der Ansprüche 1 bis 6, **dadurch gekennzeichnet** ein, daß der hintere Abschnitt (PR) in Translation verbunden ist und in Drehung auf dem Zwischenabschnitt (PI).

8. Fahrzeug, **dadurch gekennzeichnet, dass** es eine Lenksäule (CD) nach einem der vorhergehenden Ansprüche umfasst.

9. Fahrzeug nach Anspruch, **dadurch gekennzeichnet, dass** es sich um einen Kraftfahrzeugtyp handelt.

## Claims

1. A steering column (CD) for a vehicle, the has said column (CD) comprising a portion rear (PR) to which is fixed a steering wheel and coupled to a portion intermediate (PI) translatable on a predetermined maximum distance relative to a portion before (PV), intended to be secured fixedly to said vehicle, in the event of strong support on said wheel, characterized e in that' e lie further comprises d are means of retraction (MR) comprising i) at least one rack (CRj) secured fixedly to the one of said s part s Intermediate (PI) and front (PV), ii) at least one wheel toothed (Rdj) rotatably mounted relative to ' a n addition of said intermediate portions (PI) and before (PV) and meshing with said rack (CRj), and iii) drive means (ME) own, in the event of rotation being driven on an angular sector by a hand of a user of said vehicle , to drive said toothed wheel (RDj) in rotation on this angular sector in order to translate said rack (CRj), and therefore said intermediate part (PI), relative to said front part (PV) over a distance which is a function of said angular sector and less than or equal to said maximum distance.

2. A steering column according to claim 1, characterized e in that it comprises first (CR1) and second (CR2) fixedly secured racks in two opposite sides of one of said intermediate portions (PI) and front (PV), of first (RD1) and second (RD2) gears mounted for rotation with respect to two opposing sides of the ' an addition of said intermediate portions (PI) and before (PV) and engaging said respective first (CR1) and second (CR2) racks and in that said drive means (ME) comprise an axis (AX) rotatably mounted with respect to said two opposite sides of the other of said intermediate portions (PI) and front (PV) and which s is t integral es fixedly said first (RD1) and second (RD2) toothed wheels.

3. A steering column according to claim 2, characterized e in that said drive means (ME) comprise a lever (LC) secured fixedly to said axis (AX) and adapted, in case of driving in rotation by said hand of the user, rotating said axis (AX) and thus the so-called wheel toothed (Rdj).

4. A steering column according to claim 2, characterized e in that said drive means (ME) comprise a wheel fixedly secured to said axis (AX) and adapted, in case of driving in rotation by said hand of the user, to rotating said axis (AX) and therefore said toothed wheels (RDj).

5. A steering column according to claim 1, characterized e in that said drive means (ME) comprise a wheel fixedly secured to the adit e gearwheel (Rdj) and clean, in case of driving in rotation by said hand of user, rotating the has said e gearwheel (Rdj).

6. A steering column selo n one of claims 1 to 5, characterized e in that each rack (CRj) is fixedly secured to a said intermediate portion (PI) and each gearwheel (Rdj) is rotatably mounted with respect to said front part (PV).

7. A steering column selo n one of claims 1 to 6, **characterized in that** said rear portion (PR) is connected in translation and in rotation on said intermediate portion (PI).

8. Vehicle, **characterized in that** it comprises a steering column (CD) according to one of the preceding claims.

9. Vehicle according to Claim 8, **characterized in that** it is of the automobile type.
